## Europäisches Patentamt
## European Patent Office
## Office européen des brevets

(19)

(11) Veröffentlichungsnummer: **0 082 293**
**A2**

(12)
# EUROPÄISCHE PATENTANMELDUNG

(21) Anmeldenummer: **82110404.9**

(22) Anmeldetag: **11.11.82**

(51) Int. Cl.³: **B 60 C 11/00**

(30) Priorität: **19.12.81 DE 8137115 U**

(43) Veröffentlichungstag der Anmeldung:
**29.06.83 Patentblatt 83/26**

(84) Benannte Vertragsstaaten:
**AT BE CH DE FR GB IT LI NL SE**

(71) Anmelder: **Continental Gummi-Werke Aktiengesellschaft**
**Königsworther Platz 1 Postfach 169**
**D-3000 Hannover 1(DE)**

(72) Erfinder: **Pieper, Henner**
**Bahnhofstrasse 2 B**
**D-3012 Langenhagen 1(DE)**

(54) **Laufflächengestaltung für Kraftfahrzeugreifen, insbesondere Reserveradreifen.**

(57) Die Erfindung geht von Reifenlaufflächengestaltungen aus, insbesondere jedoch von Laufflächen für Reserveradreifen, bei denen der Laufstreifen mehrere Umfangsreihen aus im wesentlichen V-förmigen Klötzen aufweist, wobei aufeinanderfolgende Klötze mit ihren Spitzen entgegengesetzt quer zur Reifenumfangsrichtung zeigen und wobei insgesamt drei Reihen dieser Klötze vorgesehen sind. Außerdem sind die Klötze der in der Mitte befindlichen Reihe seitlich gegeneinander versetzt. Zur Steigerung der Belastbarkeit insbesondere bei scharfen Bremsmanövern ist aufgrund der Erfindung vorgesehen, die Tiefe der zwischen aufeinanderfolgenden Klötzen der mittleren Reihe befindlichen Schrägnuten wesentlich geringer zu gestalten als die Tiefe der Schrägnuten in den beiden seitlichen Klotzreihen und ferner auch eine geringere Tiefe im Hinblick auf die zwischen den Klotzreihen befindlichen Umfangsnuten.

FIG.1

EP 0 082 293 A2

Continental Gummi-Werke Aktiengesellschaft, Hannover

Laufflächengestaltung für Kraftfahrzeugreifen, insbesondere Reserveradreifen

Die Neuerung bezieht sich auf eine Laufflächengestaltung gemäß dem
Gattungsbegriff des ersten Anspruchs.

Bei den bekannten Laufflächengestaltungen dieser Art haben die Umfangsnuten einerseits und die zwischen aufeinander-folgenden Klötzen
befindlichen Nuten andererseits die gleiche Tiefe.

Die dadurch bedingte praktisch gleichmäßige Höhe der Klötze hat unter
besonderen Beanspruchungen der Reifen Nachteile; es können sich unter
extremen Beanspruchungen bzw. scharfen Bremsvorgängen Verschleißerscheinungen im Mittelbereich der Laufflächen einstellen, die zu Fehlern
an Reifen führen können.

Der Neuerung liegt demgemäß die Aufgabe zugrunde, eine Laufflächengestaltung der obigen Art vorzuschlagen, die einen hochbelastbaren, auch
bei scharfen Bremsvorgängen widerstandsfähigen Luftreifen gewährleistet.

Zur Lösung dieser Aufgabe ist erfindungsgemäß die Nutentiefe im Mittelbereich der Lauffläche bzw. der mittleren Reihe wesentlich geringer
als die Nutentiefe zu beiden Seiten dieser Reihe. Demgemäß ist die
Klotzhöhe der mittleren Klotzreihe kleiner als die Klotzhöhe in den
beiden Seitenbereichen der Lauffläche.

Dadurch ergibt sich im Bereich der Laufflächenmitte eine wesentlich
größere Standfestigkeit der Klötze und zudem eine vergleichsweise
dicke durchgehende Kautschukschicht als Schutzschicht oberhalb der
Karkasse.

Weitere Einzelheiten der Neuerung werden anhand der Zeichnung erläutert, in der ein Ausführungsbeispiel dargestellt ist. Es zeigen:

Fig. 1 eine Teildraufsicht auf die Lauffläche eines Luftreifens für ein Reserverad an Personenkraftwagen,

Fig. 2 einen Schnitt entlang der Linie II/II von Fig. 1,

Fig. 3 einen Schnitt nach der Linie III/III von Fig. 1 und

Fig. 4 einen Schnitt entlang der Linie IV/IV von Fig. 1.

Die Lauffläche des Reifens wird zu beiden Seiten von einer gezackten Kante 1 begrenzt, im übrigen aber bestimmt durch drei Klotzreihen 2, 3 und 4, die je aus im wesentlichen V-förmigen Klötzen 5 bestehen in der Weise, daß die Spitzen 6 aufeinanderfolgender Klötze 5 in entgegengesetzte Richtungen, also einmal nach links und einmal nach rechts zeigen (in Bezug auf die Reifenumfangsrichtung).

Die Breite der Reihen 2 und 4 entspricht dabei der axialen Erstreckung der Klötze 5. Die Breite B der mittleren Reihe ist jedoch größer gehalten. Sie beträgt etwa das 1,6-fache der Quererstreckung der einzelnen sie bildenden Klötze 5, wodurch eine Auflockerung im Laufflächenmittelbereich erreicht wird.

Die zwischen den Reihen 2, 3 und 4 befindlichen Umfangsnuten 7 sind geringfügig breiter als die Schrägnuten 8, die die Klötze 5 der Reihe 2,3 und 4 voneinander trennen.

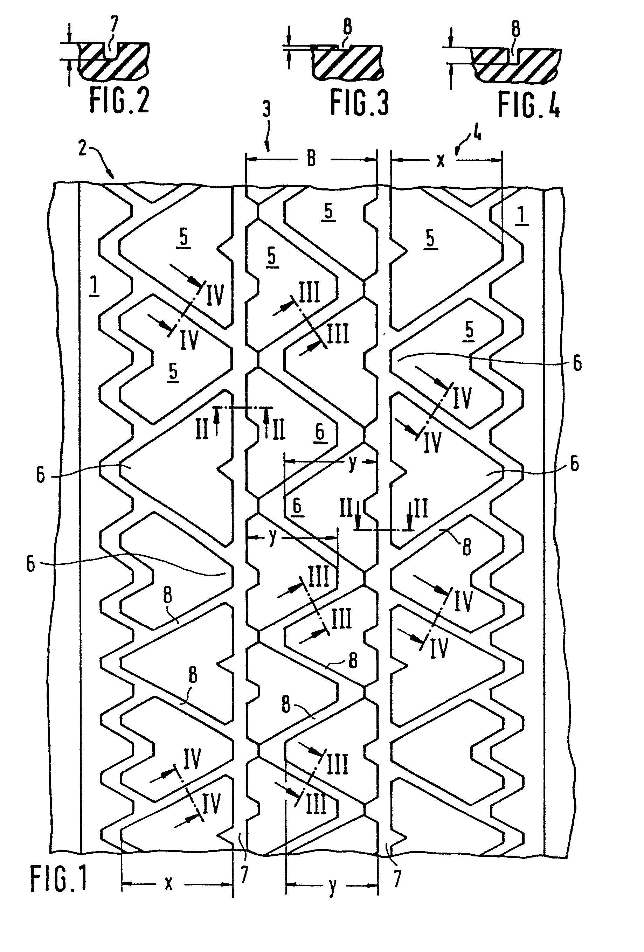

Die zwischen aufeinanderfolgenden Klötzen 5 befindlichen Schrägnuten 8 haben gemäß Fig. 3 eine vergleichsweise geringere Tiefe, wenn man die Schrägnuten 8 der beiden Reihen 2 und 4 zum Vergleich heranzieht. Die Tiefe der im Bereich B befindlichen Schrägnuten 8 ist weiterhin auch kleiner als die Tiefe der Umfangsnuten 7.

- 3 -

**0082293**

Vorzugsweise werden dabei etwa folgende Verhältniswerte und Abmessungen gewählt: Die Schrägnuten 8 in den beiden Reihen 2 und 4 erhalten eine Tiefe von etwa 4 mm bei einer Breite von etwa 2 - 3 mm; die Tiefe der Schrägnuten 8 im Bereich B soll hingegen nur etwa 1 mm betragen bei einer Breite von etwa 2 - 3 mm, während die Tiefe der Umfangsnuten 7 etwa 4 mm betragen soll bei einer Breite, die wiederum geringfügig größer ist als diejenige der Schrägnuten 8.

Dadurch ergibt sich praktisch über die Erstreckung der Breite B, also für den Laufflächenmittelbereich eine durch Gummianhäufung kompakte Zone mit Blöcken 5, die eine kleinere Höhe haben im Vergleich zu den Blöcken 5 der beiden Reihen 2 und 4.

Erwähnt sei noch, daß die axiale Erstreckung X aller Blöcke 5 der beiden Reihen 2 und 4 gleich ist; da diese Blöcke nicht gegeneinander versetzt sind, ergibt sich eine Breitenerstreckung für die Reihen 2 und 4, die dem Maß X entspricht, aber auch durch eine sehr geringe axiale Versetzung der zugehörigen Klötze 5 geringfügig größer sein kann.

Die Blöcke 5 der Reihe 3 haben untereinander alle ebenfalls die axiale Erstreckung Y; die Breite B der Reihe 3 entsteht dabei durch die gegenseitige Versetzung der Blöcke 5.

Das Maß Y ist dabei um 20 - 40 % kleiner als die axiale Erstreckung X der Blöcke 5 in den Reihen 2 und 4. Die Breite B ist dabei so gewählt, daß sie etwa das 1,4 - 1,8-fache des Maßes X ausmacht.

0082293

<u>Schutzansprüche:</u>

1. Lauffächengestaltung für Kraftfahrzeugreifen, insbesondere Reserveradreifen, mit mehreren Umfangsreihen aus im wesentlichen V-förmigen Klötzen, von denen die in Umfangsrichtung aufeinanderfolgenden Klötze mit ihren Spitzen entgegengesetzt quer zur Reifenumfangsrichtung zeigen, wobei drei Reihen vorgesehen sind, die in bekannter Weise durch gerade verlaufende Umfangsnuten voneinander getrennt sind und die Breite der beiden äußeren Reihen im wesentlichen der axialen Erstreckung eines Klotzes entspricht und bei der mittleren Reihe aufeinanderfolgende Klötze so seitlich gegeneinander versetzt sind, daß die Breite dieser Reihe etwa das 1,1 - 1,8-fache der axialen Erstreckung eines Klotzes entspricht, dadurch gekennzeichnet, daß die Tiefe der zwischen aufeinanderfolgenden Klötze (5) der mittleren Reihe (3) befindlichen Schrägnuten (8) wesentlich geringer ist als die Tiefe der übrigen zwischen den Klötzen befindlichen Schrägnuten und der zwischen den Klotzreihen befindlichen Umfangsnuten (7).

2. Laufflächengestaltung nach Anspruch 1, dadurch gekennzeichnet, daß die Tiefe der Schrägnuten (8) der mittleren Reihe (3) etwa 1/4 - 1/3 der Tiefe der übrigen Nuten (7,8) beträgt.

3. Laufflächengestaltung nach Anspruch 1, dadurch gekennzeichnet, daß die Breite der Schrägnuten (8) etwa 1/2 - 3/4 der Umfangsnuten (7) entspricht.

4. Laufflächengestaltung nach Anspruch 1, dadurch gekennzeichnet, daß die axiale Erstreckung (X) der in den Reihen (2 und 4) befindlichen Klötze (5) praktisch gleich ist und daß auch die axiale Erstreckung (Y) der aller im Bereich (B) befindlichen Klötze (5) praktisch gleich ist und daß die axiale Erstreckung (Y) der im Bereich (B) befindlichen Klötze um etwa 20 - 40 % kleiner ist als die axiale Erstreckung (X)

der in den Reihen(2 und 4)befindlichen Klötze (5).

5. Laufflächengestaltung nach Anspruch 1 - 4, dadurch gekennzeichnet, daß die Tiefe der Schrägnuten (8) im Bereich(B) etwa 1 mm und die Breite dieser Schrägnuten etwa 2 - 3 mm beträgt.

6. Laufflächengestaltung nach Anspruch 1 - 4, dadurch gekennzeichnet, daß die Tiefe der Schrägnuten (8) der beiden Reihen(2 und 4) etwa 4 mm beträgt und die Breite dieser Schrägnuten etwa 2 - 3 mm.

7. Laufflächengestaltung nach Anspruch 1 - 4, dadurch gekennzeichnet, daß die Tiefe der Umfangsnuten (7) etwa 4 mm beträgt, während die Breite dieser Nuten praktisch diesem Tiefenmaß entspricht.

Hannover, den 17. Dezember 1981
81-19 G/D                    D/Bu

FIG.2  FIG.3  FIG.4

FIG.1